(19) Europäisches Patentamt
European Patent Office
Office européen des brevets

(11) Publication number: **0 134 079**
**B1**

(12) **EUROPEAN PATENT SPECIFICATION**

(45) Date of publication of patent specification: **29.08.90**

(51) Int. Cl.$^5$: **C 07 C 69/65**, C 07 C 67/30

(21) Application number: **84304182.3**

(22) Date of filing: **21.06.84**

# (54) Process for preparing poly alpha olefins.

(30) Priority: **31.08.83 US 528020**
**31.08.83 US 528202**

(43) Date of publication of application:
**13.03.85 Bulletin 85/11**

(45) Publication of the grant of the patent:
**29.08.90 Bulletin 90/35**

(84) Designated Contracting States:
**DE FR GB IT NL**

(56) References cited:
EP-A-0 024 485
EP-A-0 040 889
US-A-2 525 912
US-A-2 624 751
CHEMICAL ABSTRACTS, Vol. 59, No. 13, 23th December 1963, column 15124g-h, Columbus, Ohio, US; K.N. GAIND et al.: "Preservatives", & INDIAN J. PHARM. 1963, 25, 264-268 (cat. D)
CHEMICAL ABSTRACTS, Vol. 50, No. 22, 25th November 1956, columns 17295f-i, 17296a, Columbus, Ohio, US; P.H. PLAISTED "Suppression of tomato-plant terminal growth by alpha-cyanocinnamic acids and related compounds", & CONTRIBS. BOYCE THOMPSON INST. 1955, 18, 231-242

(73) Proprietor: **UNIROYAL CHEMICAL COMPANY, Inc.**
**World Headquarters**
**Middlebury Connecticut 06749 (US)**

(72) Inventor: **Khan, J.A.**
**67 Newfield Avenue Waterbury**
**New Haven Connecticut 06708 (US)**
Inventor: **Smudin, D.J.**
**88 National Avenue, Apt. 4 Waterbury**
**New Haven Connecitcut 06854 (US)**
Inventor: **Nudenburg, W.**
**Route 3, Taunton Lake Road Newton**
**Fairfield Connecticut 06740 (US)**
Inventor: **Matthews, D.N.**
**49 Brookwood Road Bethany**
**New Haven Connecticut 06525 (US)**

(74) Representative: **Harrison, Michael Robert et al**
**URQUHART-DYKES & LORD 5th Floor Tower House Merrion Way**
**Leeds LS2 8PA West Yorkshire (GB)**

(56) References cited:
**PATENT ABSTRACTS OF JAPAN, Vol. 2, No. 136 (C-78), 11th November 1978, page 3016 C 78; & JP - A - 53 103 415 (SANKYO) 09.08.1978**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Courier Press, Leamington Spa, England.

**Description**

Background of the Disclosure

1. Field of Invention

This invention is related to a process for preparing polyalpha-olefins using a novel catalyst activator.

2. Background of the Invention

In polymerisation of alpha-olefins a transition metal catalyst and an organoaluminum catalyst are usually employed. In order to enhance catalyst efficiency and/or regulate polymer molecular weight, a catalyst activator may be used. Among the known activators are those disclosed in US Patent 3,377,325, which uses a sulfur activator; Canadian Patent 833,651, using phosphorus trichloride and 2-nitropropane as activators; US Patent 3,441,564 teaches an organic nitro compound as activator; US Patent 3,444,149 discloses the use of a nitroso compound or a quinone as activator; US Patent 3,462,399 deals with activation by organic nitrates, organic nitrites, ozoxy compounds, special organic metallic compounds or alkyl disulfides; US Patent 3,507,843 uses a phosphorus trichloride activator; and US Patent 4,347,159 employs a furoate compound as activating agent.

None of these activators combine the advantages of catalyst efficiency, control the molecular weight and molecular weight distribution of the polymer produced and are useful in both homogenous and heterogeneous phase systems.

Description of the Invention

In the process according to the invention the activator compounds activate the catalyst such that the unit weight of catalyst required per unit weight of polymer produced is minimized. The activators also operate to regulate the molecular weight and the molecular weight distribution of the polymerization product. Most surprisingly, they can be employed to polymerize alpha-olefins in combination with homogeneous and heterogeneous catalyst systems as well as in solution and polymerizations conducted in the presence of liquid reaction medium in the absence of a solvent.

In accordance with this invention there is provided a process for preparing polyalpha-olefins in the presence of a reaction medium reactive to the polymerization comprising contacting at least one monomer having the structure $H_2C{=}CHQ$, where Q is the hydrogen atom or a $C_1$—$C_{16}$ alkyl group, with an anionic polymerization catalyst, said process characterized in that it is carried out in the presence of an activator having the formula:

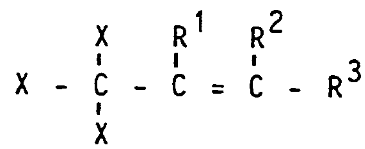

wherein X is a chlorine or bromine atom, $R^1$ and $R^2$ are each independently hydrogen, chlorine or bromine atoms, and $R^3$ is a $C_2$—$C_{19}$alkoxycarbonyl group, and that the molar ratio of activator to catalyst is between 5:1 and 100:1.

In contrast EP—A—24485 discloses a ratio of 2.5:1 resulting in markedly inferior polymer to catalyst values.

The activator compounds employed in the process of the invention having the structure:

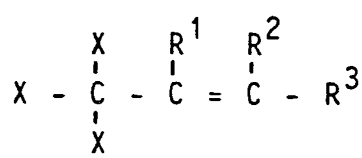

may be prepared by reacting a compound having the formula:

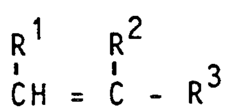

(A)

with a compound having the formula:

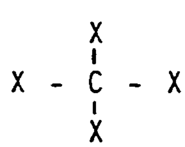

(B)

wherein $R^1$, $R^2$, $R^3$ and X are as defined above, in the presence of dichlorotris[triphenylphosphine]-ruthenium, and secondly treating the resultant product with a strong Lewis base such as triethylamine.

In the first step of the preparation, the reactants are present at essentially stoichiometric amounts, i.e. the A/B molar ratio being from 1.1/1 to 1/1.1, and the reaction is carried out at a temperature of 50—100°C for 0.5—5 hours, usually at reflux temperature. In the second step, dehydrohalogenation is effected by heating the intermediate product of the reaction compounds A and B:

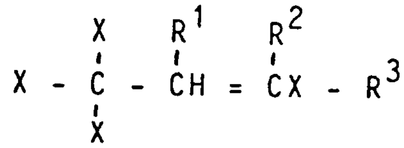

to 50—120°C in the presence of a strong Lewis base and a solvent inert to the intermediate for 5—100 hours, usually 10—75 hours. A strong Lewis base is understood to mean a basic compound having $pK_b$ of 5 or less, represented by ammonia, dimethylamine, trimethylamine, di- and triethylamine, propylene and the like. Suitable inert solvents include heptane, octane, isooctane, decane, benzene, toluene, xylene and the like.

Example 1

Preparation of Butyl 4,4,4-trichlorobut-2-transenoate (BTCB)

128 grams (1 mole) of freshly distilled butyl acrylate was reacted with 300 ml of carbon tetrachloride in the presence of 1.92 (2 millimoles) of dichlorotris[triphenylphosphine)ruthenium, under nitrogen, in a three necked (1 liter round bottom) flask, equipped with a condenser, an overhead mechanical stirrer and a thermometer. The reaction mixture was heated to reflux (80°C) for about 1 hour, at which time the mixture turned brownish in color. The mixture was cooled to room temperature, and excess $CCl_4$ was removed using a rotary evaporator. The catalyst was precipitated by addition of n-heptane which was separated by decantation from the remaining supernatant brown viscous material. The brown viscous reaction product was isolated by evaporation of the n-heptane (using a rotary evaporator). It weighed 275 grams (97% yield).

Infrared analysis (IR) of the product did not show an absorption attributable to vinylic type unsaturation indicating the absence of an acrylic double bond. After distillation, at 80°C and 26.6 Pa, the reaction product was a clear, colorless oil.

The reaction product (289 gm, 1 mole), triethylamine (138 ml, 1 mole) and benzene (500 ml) was placed in a three necked round bottom 2-liter flask equipped with an overhead mechanical stirrer, a condenser and a thermometer. This reaction mixture was heated at reflux (80°C) for 50 hours. After adding an additional 30 ml (0.2 mol) of triethylamine reflux was continued for another 20 hours.

After this total of 70 hours at reflux, a dark brownish material was obtained. The reaction product was filtered. The solid $(C_2H_5)_3NHCl$ salt was removed leaving a soltuion from which the benzene solvent was removed by a rotary evaporator. The resultant dark brown viscous material (234 gm, 95% yield) was distilled (72—74°C at 40 Pa). The product, butyl 4,4,4-trichlorobut-2-transenoate was a colorless, clear viscous oil (90% yield). The IR and nuclear magnetic resonance (NMR) spectral ($^1H$ and $^{13}C$) data, which appear in Table II, were consistent with this compound. The elemental analysis for this compound appears in Table III.

Example 2

Preparation of methyl 2-methyl-4,4,4-trichlorobut-2-enoate (MMTB)

A carbon tetrachloride addition reaction was carried out in accordance with procedure set out with step 1 of Example 1. However, in this example butyl acrylate was replaced with methyl methacrylate. The addition reaction produced was recovered as a colorless, viscous material. The IR spectrum was consistent with that compound.

One mole of the above reaction product was dehydrochlorinated in accordance with the procedure enumerated for Step 2 in Example 1.

The product of this reaction, methyl 2-methyl-4,4,4-trichlorobut-2-enoate, was recovered as a clear, colorless oil (yield 85%). The IR and NMR data appear in Table II, and its elemental analysis is summarized in Table III.

Example 3

Preparation of Ethyl 4,4,4-trichlorobut-2-enoate (ETCB)

The carbon tetrachloride addition reaction of step 1 of Example 1 was repeated with the exception that butyl acrylate was replaced by ethyl acrylate. The reaction was conducted under the same conditions as were employed in Example 1. The product of this reaction was purified by distillation. The distilled product was obtained in a 93% yield. The IR spectrum was consistent with that compound. Tables II and III provide elemental analysis and IR and NMR spectral data, respectively, for the ETCB made in accordance with this example.

Example 4

Preparation of 2-Ethylhexyl 4,4,4-trichlorobut-2-enoate (EHTB)

The carbon tetrachloride addition reaction was repeated but for the substitution of 2-ethylhexyl acrylate for butyl acrylate of Example 1. The addition product of this reaction yielded an IR spectrum consistent with that compound.

The above reaction product was dehydrochlorinated in accordance with the procedure of Example 1. The resultant product, 2-ethylhexyl 4,4,4-trichlorobut-2-enoate, was obtained after vacuum distillation in an 80% yield. The IR spectrum was consistent with the title compound.

TABLE II

| Example | Calculated % | | Found % | | | | |
|---|---|---|---|---|---|---|---|
| No. | Compound | C | H | Cl | C | H | Cl |
| 1 | Butyl 4,4,4-trichloro-but-2-transenoate | 39.13 | 4.52 | 43.32 | 39.10 | 4.44 | 43.32 |
| 2 | Methyl 2-methyl-4,4,4-trichlorobut-2-enoate | 33.10 | 3.22 | 48.96 | 32.94 | 3.12 | |
| 3 | Ethyl 4,4,4-trichloro-but-2-enoate | 33.13 | 3.21 | 48.3 | 32.73 | 3.11 | 47.83 |

TABLE III

I.R. AND N.M.R. SPECTROSCOPY DATA

| Example No. | Compound | $^{1}H$ - NMR (8 PPM)<br>$^{13}C$ - NMR |
|---|---|---|
| 1 | Butyl 4,4,4-trichlorobut-2-transenoate | 0.97 (t,3H), 1.42 (m, 2H), 1.68 (m, 2H)<br>4.2 (t, 2H), 6.39 (d, 1H), 7.20 (d, 1H)<br>CIS (J = 9 HZ) TRANS (J = 15 HZ)<br>13.58, 19.04, 30.53, 65.32, 92.17<br>121.73, 145.97, 164.63 |
| 2 | Methyl 4,4,4-trichloro-2-methylbut-2-enoate | 1.90 (s, 3H), 4.1 (t, 3H) 6.2 (s, 1H)<br>53.42, 62.23, 94.59, 135.25, 143.14,<br>169.95 |
| 3 | Ethyl 4,4,4-trichlorobut-2-enoate | 1.30 (t, 3H), 4.25 (q, 2H),<br>6.36 (d, 1H), 7.2 (d, 1H)<br>14.01, 61.34, 92.11, 121.69, 145.90<br>164.43 |

As mentioned previously, the compounds of this invention are useful as catalyst activators for anionic polymerization of alpha-olefins employing Ziegler-Natta Type catalyst systems. Such catalytic systems are well known in the art and essentially comprise the combination of a transition metal salt catalyst and an organoaluminum or magnesium compound or halide cocatalyst.

Such catalytic systems may be homogenous or heterogenous in nature, i.e., they may or may not be soluble in the polymerization medium, and they are capable to polymerizing alpha-olefins. Under alpha-olefins are considered monomers having the formula $CH_2{=}CHQ$, wherein Q is hydrogen or $C_1$—$C_{16}$ alkyl such as ethylene, propylene, butene-1, pentene-1, hexane-1, decene-1, dodecene-1, 4-methylpentene-1, 4-ethylhexene-1, and the like which may be homo- or copolymerized to crystalline or essentially amorphous and elastomeric polymers such as polyethylene, polypropylene, polybutene, etc., or ethylene-propylene copolymers or elastomers (EPM). Elastomeric copolymers of ethylene and other alpha-olefins such as propylene may also incorporate copolymerizable non-conjugated dienes such as dicyclopentadiene (DCPD), 5-ethylidenorbornene-2 (ENB) or 1,4-hexadiene (1,4HD). Such terpolymers are known as EPDM's. The cocatalyst-catalyst molar ratio may vary from 2/1 to 500/1, usually 5/1—350/1 and more frequently 10/1—200/1; and when employing the catalyst activators of this invention, the molar activator/catalyst ratio may range from 1/1 to 100/1, more frequently 2/1—80/1 and usually 5/1—50/1.

Such polymerizations may be conducted in the presence of an inert medium. Typical media are

pentane, hexane, heptane, octane, isooctane, decane, benzene, toluene, methylene chloride, chloroform and the like.

In any case, the compounds of this invention, exhibit extraordinary activation characteristics when used in such polymerizations as illustrated by the examples below.

Example 5

Preparation of EPDM

To a dry 1500 ml 3-necked round bottom flask equipped with stirrer, thermometer, condenser, gas inlet tube and a 1-liter dropping funnel was added 1000 ml dry n-heptane solvent. Dry ethylene and propylene monomers were simultaneously introduced until to solvent was saturated, i.e., no further monomer uptake was observed. Then 1.34 ml of a 0.74 M heptane solution of ethyl-aluminum sesquichloride (EASC) cocatalyst (ca. 1 millimole) was introduced. While maintaining the ethylene-propylene feed, dropwise addition of a solution of 0.05 millimole $VOCl_3$ catalyst, 0.1 millimole BTCB and 10 millimole ENB, all in 60 ml n-heptane was started causing polymerization to commence. $VOCl_3$, etc., addition took about 50 minutes, but monomer introduction was continued for another 10 minutes, after which time the polymerization was terminated by the addition of 5 ml isopropanol. The polymer in solution was extracted with isoproponal to which a small amount of antioxidant was added. The stabilized polymer was recovered, weighed and analyzed.

The polymer was analyzed as EPDM characterized by an ethylene to propylene weight ratio of 68:32, an intrinsic viscosity of 1.6, as measured in tetralin at 135°C, an iodine number of 8.4 and a glass transition temperature of −52°C. The yield of EPDM polymer was 43 grams representing a catalyst efficiency of 860 g polymer per millimole of vanadium.

See also summary in Table III.

Examples 6—9

Following essentially the procedure of Example 5, additional polymerizations were conducted. The results are summarized in Table IV. Example 9 is outside this invention.

TABLE IV

| Example No. | 5 | 6 | 7 | 8 | 9 |
|---|---|---|---|---|---|
| Catalyst activator | BTCB | MMTB | ETCB | EHTB | none |
| Polymer yield, g | 43 | 26.7 | 14 | 37 | 8.3 |
| g Polymer/millimole V | 860 | 533 | 280 | 740 | 166 |
| V residue in polymer, ppm | 59 | 95 | 169 | 70 | 280 |
| Polymer characteristics | | | | | |
| Intrinsic viscosity, dl/g* | 1.7 | 3.2 | 3.35 | 2.38 | 2.76 |
| Unsaturation, $I_2$ No. | 8.4 | 10.8 | 20.9 | - | - |
| Ethylene/propylene, weight | 68/32 | 74/26 | 75/25 | 72/28 | 70/30 |

* In tetralin at 135°C.

The data clearly indicate the extraordinary improvement in catalyst efficiency achieved (i.e., g of polymer per millimole of vanadium catalyst) when using the compounds of this invention as catalyst activators.

Examples 10 and 11

Preparation of EPDM

A dry 2-liter Parr [trademark] autoclave, equipped with a pressure gauge, as gas inlet tube, and outlet port and a stirrer was cooled externally with dry ice while flushing with dry nitrogen. Propylene monomer was condensed, and the autoclave temperature was brought to −19°C, at which point hydrogen gas was introduced at 138 kPa excess pressure as well as ethylene at the same pressure. Then, while stirring, a solution of catalyst (0.025 millimole), EASC (1.48 millimole), ENB (5.4 g) and catalyst activator (0.4 mmole) in 1000 ml heptane was charged to the autoclave which initiated polymerization. The reactor temperature was reduced to −27°C using a dry ice-isopropanol bath while ethylene feed was continued at the above pressure for one hour. The polymerization was stopped by adding a sufficient amount of isopropanol (having dissolved therein some antioxidant) to the reactor. The reactor contents, EPDM particles dispersed in monomer, were isolated, dried, weighed and analyzed. The results are summarized in Table V below.

TABLE V

| Example No. | 10 | 11 |
|---|---|---|
| Ethylene, g | 118 | 114 |
| Propylene, g | 490 | 509 |
| ENB, g | 5.4 | 5.4 |
| EASC, mmol | 1.48 | 1.48 |
| VBDP(1), mmol | 0.025 | - |
| $VOCl_3$, mmol | - | 0.025 |
| BTCB, mmol | 0.4 | 0.4 |
| Al/V, molar | 59.2 | 59.2 |
| BTCB/V, molar | 16 | 16 |
| Hydrogen, kPa(2) | 138 | 138 |
| Reaction time, minutes | 60 | 60 |
| Polymer yield, g | 109.7 | 89.8 |
| g Polymer/mmol V | 4388 | 3592 |
| Polymer characteristics | | |
| Ethylene/propylene, weight | 62/38 | 69/31 |
| $I_2$ No. | 5.9 | 3.8 |
| I.V. (tetralin at 135°C) | 2.54 | 4.08 |
| V metal in polymer, pmm | 11.6 | 14.2 |

Remarks

(1) VBDP = vanadylbis[diethylphosphate] catalyst

(2) Excess pressure

The results indicate the excellent catalyst efficiency achieved when using the compounds of this invention as catalyst activators.

Examples 12—16

Preparation of EPDM

To a dry 5 gallon stainless steel jacketed reactor provided with a stirrer was added (with cooling medium flowing in the jacketed portion of the reactor) propylene, 1.75 moles hydrogen (3.5 g) and ethylene. To this was added EASC in isopentane (120 ml). Stirring was initiated at 175 revolutions per minute. With the temperature in the reactor set at −8°C, cooling was discontinued and a solution of 0.2

millimoles of catalyst, 36 milliliters of ENB, catalyst activator (amount provided in Table VI) in 280 ml of isopentane was incrementally added to the reaction mass by means of a positive displacement pump. The addition of the catalyst solutions initiated the reaction. The reaction was terminated by passing the propylene liquid containing suspended polymer into an isopropanol solution containing an antioxidant. The polymer was separated from the liquid phase by filtration and analyzed.

A summary of Examples 12—16 appears below in Table VI.

TABLE VI

| Example No. | 12 | 13 | 14 | 15 | 16 |
|---|---|---|---|---|---|
| Polymerization | | | | | |
| Ethylene, g | 650 | 750 | 620 | 851 | 809 |
| Propylene, g | 7000 | 7000 | 7000 | 7000 | 7000 |
| ENB, g | 17.5 | 36 | 36 | 28.2 | 33.4 |
| EASC, mmol | 16.7 | 8.3 | 28 | 8.3 | 8.3 |
| $VOCl_3$, mmol | 0.097 | 0.081 | 0.64 | - | - |
| VBDP(1), mmol | - | - | - | 0.123 | 0.132 |
| BPCC(2), mmol | 3.1 | 2.6 | 2.9 | 3.9 | 4.2 |
| Hydrogen, g | 3.5 | 3.5 | 3.5 | 3.5 | 3.5 |
| Al/V, molar | 343 | 205 | 87 | 135 | 126 |
| BPCC/V, molar | 32 | 32 | 6 | 32 | 32 |
| Reaction time, min. | 95 | 115 | 123 | 112 | 113 |
| Polymer yield, g | 493 | 605 | 877 | 1023 | 1011 |
| g Polymer/mmol V | 5082 | 7470 | 1370 | 8320 | 7660 |
| Polymer characteristics | | | | | |
| Ethylene/propylene, weight | 59/41 | 59/41 | 52/48 | 53/47 | 52/48 |
| $I_2$ No. | 3.2 | 5.5 | 2.7 | 2.7 | 2.7 |
| I.V., dl/g(3) | 2.54 | 2.0 | 4.95 | 3.28 | 2.82 |

Remarks:

(1) vanadylbis[diethylphosphate] catalyst

(2) butyl perchlorocrotonate catalyst activator

(3) in tetraline at 135°C.

Example 17

Following essentially the procedure of Example 1, dimethyl 2-trichloromethylbut-2-endioic acid ester (DMBA) was prepared from dimethyl fumarate and bromotrichloromethane and by subsequent dehydrobromination of the intermediate.

Example 18

Reacting butyl methacrylate with tetrachloromethane and subsequent dehydrohalogenation resulted in the compound n-butyl 2-methyl-4,4,4-trichlorobut-2-enoate (BMTB).

Example 19

From methyl acrylate and carbon tetrachloride was prepared the intermediate $Cl_3CCH_2CHClCOOCH_3$, which, upon dehydrohalogenation yielded methyl 4,4,4-trichlorobut-2-enoate (MTCB).

Examples 20—25

Following essentially the procedure of Example 1, additional EPDM preparations were carried out using compounds of this invention as catalyst activators. The results are summarized in Table VII.

TABLE VII

| Example No. | 20 | 21 | 22 | 23 | 24 | 25 |
|---|---|---|---|---|---|---|
| Catalyst Activator | MTCB | DMBA | BMTB/C(1) | BMTB/T(2) | BTCB/C(1) | BTCB/T(2) |
| Polymer yield, g | 22 | 19 | 46 | 58 | 38 | 58 |
| g polymer/mmol V | 440 | 380 | 920 | 1160 | 760 | 1160 |

Remarks:

(1) believed to be primarily the cis-isomer

(2) believed to be primarily the trans-isomer

Improved catalyst activity is clearly demonstrated with transisomers having a more pronounced effect.

The foregoing preferred embodiments and examples will make apparent, to those skilled in the art, other embodiments and examples. These embodiments and examples, within the scope and spirit of the instant invention, are within the contemplation of the present invention. Therefore, the scope of the instant invention should be limited only by the appended claims.

## Claims

1. A process for preparing polyalphaolefins in the presence of a reaction medium reactive to the polymerization comprising contacting at least one monomer having the structure $H_2C=CHQ$, where Q is the hydrogen atom or a $C_1$—$C_{16}$ alkyl group, with an anionic polymerization catalyst, said process characterized in that it is carried out in the presence of an activator having the formula:

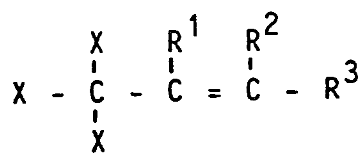

wherein X is a chlorine or bromine atom, $R^1$ and $R^2$ are each independently hydrogen, chlorine or bromine atoms, and $R^3$ is a $C_2$—$C_{19}$ alkoxycarbonyl group, and that the molar ratio of activator to catalyst is between 5:1 and 100:1.

2. A process in accordance with claim 1 wherein the anionic polymerization catalyst is vanadium.

3. A process in accordance with claim 1 wherein the monomers further comprise at least one copolymerizable nonconjugated diene.

4. A process in accordance with claim 1 wherein the reaction medium further comprises a solvent inert to the polymerization reactants.

## Patentansprüche

1. Verfahren zur Herstellung von Poly-alpha-olefinen in Gegenwart eines Reaktionsmediums, das bezüglich der Polymerisation reaktionsfähig ist, bei dem wenigstens ein Monomer mit der Struktur $H_2C=CHQ$, worin Q eine Wasserstoffatom oder eine $C_1$- bis $C_{16}$-Alkylgruppe ist, mit einem Katalysator für anionische Polymerisation in Berührung gebracht wird, wobei das Verfahren dadurch gekennzeichnet ist, daß es in Gegenwart eines Aktivators mit der Formel

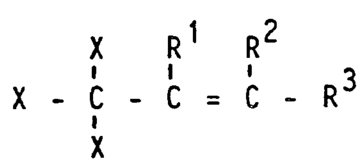

worin X ein Chlor- oder Bromatom ist, $R^1$ und $R^2$ jeweils unabhängig voneinander Wasserstoff-, Chlor- oder Bromatome sind und $R^3$ eine $C_2$- bis $C_{19}$-Alkoxycarbonylgruppe ist, durchgeführt wird und daß das Molverhältnis von Aktivator zu Katalysator zwischen 5:1 und 100:1 liegt.

2. Verfahren nach Anspruch 1, bei dem der Katalysator für anionische Polymerisation Vanadium ist.

3. Verfahren nach Anspruch 1, bei dem die Monomere ferner wenigstens ein copolymerisierbares nichtkonjugiertes Dien enthalten.

4. Verfahren nach Anspruch 1, bei dem das Reaktionsmedium ferner ein Lösungsmittel enthält, das gegenüber den Reaktionsteilnehmern der Polymerisation inert ist.

**Revendications**

1. Procédé de préparation de poly(alpha)oléfines en présence d'un milieu réactionnel réactif à la polymérisation comprenant la mise en contact d'au moins un monomère ayant pour structure $H_2C{=}CHQ$ où Q est l'atome d'hydrogène ou un groupe alkyle $C_1$—$C_{16}$, avec un catalyseur de polymérisation anionique, ledit procédé étant caractérisé en ce qu'il est effectué en présence d'un activateur ayant pour formule

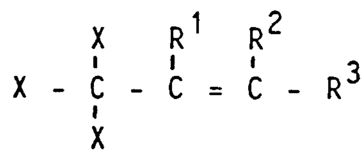

où X est un atome de chlore ou de brome, chacun de $R^1$ et $R^2$ est indépendamment des atomes d'hydrogène, de chlore ou de brome et $R^3$ est un groupe alcoxycarbonyle $C_2$—$C_{19}$ et en ce que le rapport molaire de l'activateur au catalyseur est compris entre 5:1 et 100:1.

2. Procédé selon la revendication 1 où le catalyseur de polymérisation anionique est le vanadium.

3. Procédé selon la revendication 1 où les monomères comprennent de plus au moins un diène copolymérisable non conjugué.

4. Procédé selon la revendication 1 où le milieu réactionnel contient de plus un solvant inerte aux réactifs de polymérisation.